# FASCICULE DE BREVET EUROPEEN

(11) **EP 2 457 079 B1**
(45) Date de publication et mention de la délivrance du brevet: **09.09.2015**
(21) Numéro de dépôt: 10752066.0
(22) Date de dépôt: 21.07.2010
(51) Int. Cl.: G01N 1/30

(54) **COMPOSITION DE FIXATION CYTOLOGIQUE OU HISTOLOGIQUE ET PROCEDES DE COLORATION**
ZYTOLOGISCHE ODER HISTOLOGISCHE BINDUNGSZUSAMMENSETZUNG UND FÄRBEVERFAHREN
CYTOLOGICAL OR HISTOLOGICAL BINDING COMPOSITION AND STAINING METHODS

(30) Priorité: 22.07.2009 FR 0955127
(43) Date de publication de la demande: 30.05.2012
(73) Titulaire: R.A.L. Diagnostics, 33650 Martillac (FR)
(72) Inventeur: DAGIRAL, Rodolphe, Louis, Guy, F-33140 Villenave d'Ornon (FR); MONTIEL, Florian, F-33500 Pomerol (FR)
(74) Mandataire: Cenatiempo, Julie Adeline Anne
(86) Numéro de dépôt international: PCT/FR2010/051540
(87) Numéro de publication internationale: WO 2011/010064

(56) Documents cités:
- WO-A1-92/19951
- WO-A1-94/07532
- WO-A1-2008/043963
- FR-A1- 2 854 239

## Description

La présente invention se rapporte à une composition pour fixer des tissus, des cellules ou des composants cellulaires sur des lames, en vue de leur coloration et leur analyse.

L'invention concerne également un procédé de préparation de ce fixateur et son utilisation en histologie ou cytologie. Une utilisation particulière de la présente invention est un procédé de coloration de tissus, cellules ou composants cellulaires, notamment pour le sang et la moelle, utilisant ce fixateur.

Pour identifier des tissus, des cellules ou des parties de cellules, on utilise des techniques de coloration cellulaire associées à l'observation microscopique ou à des systèmes d'analyse d'image.

Ces méthodes de coloration sont indispensables dans de nombreux domaines de la biologie, aussi bien en recherche fondamentale qu'en analyse médicale ou vétérinaire pour le diagnostic tissulaire ou le cytodiagnostic.

En hématologie notamment, on utilise depuis de très nombreuses années la coloration connue sous le nom de MGG, May-Grünwald Giemsa. Le procédé de coloration consiste :
- à fixer les cellules à colorer sur une lame avec une solution de May-Grünwald constituée par du bleu de méthylène - éosine dissout dans du méthanol,
- à mettre en contact la lame avec une solution tamponnée,
- puis à la mettre en contact avec une solution de Giemsa constituée par du bleu Azur II - éosine dissout dans du méthanol avec de la glycérine,
- et enfin à la rincer et à la sécher.

On obtient alors des colorations connues de tous les praticiens qui font de cette technique un standard et permettent d'établir des comparaisons fiables. Néanmoins la coloration MGG présente de nombreux inconvénients. En particulier, elle met en oeuvre des solvants toxiques et volatils. En outre, la présence de glycérine engendre également des inconvénients car elle rend plus difficiles les rinçages des lames et peut engendrer des colmatages des filtres lors de la filtration.

De plus, pour réaliser une bonne coloration, il est important que le colorant soit stable et qu'il ne persiste pas de dépôts de colorants après rinçage de la lame. Or de tels dépôts peuvent apparaître avec le MGG. Ces dépôts perturbent le fonctionnement des dispositifs automatiques de coloration et des systèmes de reconnaissance de cellules et gênent la distinction des différents éléments cellulaires et la reconnaissance des cellules saines des cellules malades dans le cas d'un cytodiagnostic.

Afin d'éviter ces inconvénients, on a tenté de remplacer le MGG par d'autres procédés de coloration.

Toutefois, une majorité des procédés développés pour remplacer le MGG ne permettent ni de conserver sa reproductibilité essentielle pour l'analyse, ni d'obtenir des résultats comparables.

En outre, comme le MGG, ils utilisent du méthanol que ce soit pour réaliser les colorants en eux-mêmes ou la solution de fixation des cellules. En effet, le méthanol présente des propriétés physiques particulières qui lui permettent de bien fixer les cellules.

Or, le méthanol est un produit toxique et volatil dont il est souhaitable de limiter l'utilisation car il peut s'avérer dangereux pour le praticien.

Des solutions ont été proposées en remplaçant le méthanol par de l'éthanol mais l'éthanol seul ne donne pas des résultats satisfaisants, notamment lorsqu'il est utilisé pour la fixation.

D'autres solutions consistent à utiliser de l'acide picrique, du formaldéhyde, du glutaraldéhyde ou encore de l'acide osmique comme agent de fixation des structures cellulaires.

Or, si les résultats obtenus peuvent être de qualité, la présence de produits toxiques entraîne des risques pour les personnes amenées à les manipuler.

Par ailleurs, avec le développement des systèmes d'analyse d'images il est nécessaire d'utiliser des automates de coloration afin d'assurer un déroulement toujours identique des étapes de coloration. Or, avec les réactifs et produits de fixation actuels, ces machines souffrent d'une maintenance lourde, car ils provoquent un encrassement rapide des circuits et réservoirs.

Enfin, on sait que, de façon historique, selon les pays auxquels on s'adresse, les réactifs de coloration peuvent être différents, pour un même domaine de la biologie. Cela se traduit par des teintes différentes et une visualisation plus ou moins marquée de tel ou tel type d'élément cellulaire. On distingue classiquement en hématologie des colorations faisant intervenir une combinaison de réactifs de coloration (comme les colorant de MGG utilisés dans les pays de « culture européenne »), et des colorations faisant intervenir un réactif de coloration unique (comme les colorants de Wright et de Leishman, utilisés dans les pays de « culture anglo-saxone ou asiatique»). Or, les solutions de fixation utilisées actuellement sont spécifiques à un procédé de coloration donné, et il n'est pas possible d'utiliser le même fixateur pour deux procédés différents.

Il subsiste donc un besoin pour des produits destinés à la coloration des tissus, cellules ou composants cellulaires, non toxiques, stables, économiques, faciles d'utilisation, permettant d'obtenir des résultats reproductibles et adaptés aux automates de coloration. En particulier il subsiste un besoin pour un produit de fixation des tissus, cellules ou éléments cellulaires sur des lames en vue de leur étude au microscope, qui réponde à ces exigences et qui s'adapte à différents procédés de coloration.

C'est ce à quoi répond la présente invention en proposant d'utiliser une composition de fixation histologique ou cytologique palliant les inconvénients de l'art antérieur, particulièrement adaptée au domaine de l'hématologie. L'invention vise à cet effet l'utilisation d'une composition comprenant au moins :
- un alcool,
- du diméthylsulfoxyde,
- de l'éthylène glycol,
- de l'eau, et
- du chlorure de sodium,
pour fixer des tissus, cellules ou composants cellulaires sur une lame en vue de leur coloration et de leur analyse au microscope ou par un système d'analyse d'image.

L'invention vise aussi la composition de fixation histologique ou cytologique, ou fixateur, utilisée.

Avantageusement une telle composition de fixation ne contient pas de produit toxique. Elle permet de conserver efficacement les cellules en vue de leur coloration de façon à obtenir des résultats reproductibles et stables facilement analysables au microscope ou par des systèmes d'analyse d'image.

L'invention se rapporte aussi à un procédé de préparation de cette composition. Préférentiellement la composition de fixation comprend également au moins un colorant bleu et un colorant rouge et peut être utilisée simultanément à la fois pour fixer et colorer les cellules.

Enfin, l'invention vise également un procédé de coloration de cellules ou d'éléments cellulaires, adapté notamment pour le sang et la moelle, utilisant la composition de fixation.

De façon avantageuse, le procédé selon l'invention permet d'obtenir des résultats reproductibles, d'une très bonne qualité. En outre il est économique, rapide, fiable, facile d'utilisation et ne nécessite qu'une faible teneur en colorants. L'invention est maintenant décrite en détail en regard des figures annexées sur lesquelles :
- la figure la représente un frottis sanguin après une coloration MGG,
- la figure 1b représente un frottis sanguin après une coloration MGG avec une mauvaise fixation,
- la figure 1c représente un frottis sanguin après une coloration Wright,
- la figure 1d représente un frottis sanguin après une coloration Leishman,
- la figure 2a représente un frottis sanguin après fixation et coloration par la composition selon l'invention, par la mise en oeuvre d'un procédé de coloration type coloration MGG,
- la figure 2b représente un frottis sanguin après fixation et coloration par la composition selon l'invention, par la mise en oeuvre d'un procédé de coloration type coloration de Wright/Leishman,
- la figure 3a représente un frottis sanguin après une coloration rapide avec un procédé comprenant une étape de fixation préliminaire pendant 1 minute à l'éthanol à 70° + 2% d'éthylène glycol,
- la figure 3b représente un frottis sanguin après une coloration rapide avec un procédé comprenant une étape de fixation préliminaire pendant 1 minute à l'éthanol à 99,9° + 2% d'éthylène glycol,
- la figure 3c représente un frottis sanguin après une coloration rapide avec un procédé comprenant une étape de fixation préliminaire pendant 5 minutes à l'éthanol à 99,9° + 2% d'éthylène glycol,
- la figure 4 représente un frottis sanguin après une coloration rapide avec un procédé comprenant une étape de fixation préliminaire pendant 5 minutes à l'éthanol à 99,9° + 2% d'éthylène glycol + diméthylsulfoxyde,
- la figure 5a représente un frottis sanguin après une coloration rapide avec un procédé comprenant une étape de fixation préliminaire pendant 5 minutes à l'éthanol à 99,9° + 2% d'éthylène glycol + diméthylsulfoxyde + 5mL d'eau,
- la figure 5b représente un frottis sanguin après une coloration rapide avec un procédé comprenant une étape de fixation préliminaire pendant 5 minutes à l'éthanol à 99,9° + 2% d'éthylène glycol + diméthylsulfoxyde + 10mL d'eau,
- la figure 5c représente un frottis sanguin après une coloration rapide avec un procédé comprenant une étape de fixation préliminaire pendant 5 minutes à l'éthanol à 99,9° + 2% d'éthylène glycol + diméthylsulfoxyde + 20mL d'eau,
- la figure 6a représente un frottis sanguin après une coloration rapide avec un procédé comprenant une étape de fixation préliminaire pendant 5 minutes à l'éthanol à 99,9° + 2% d'éthylène glycol + diméthylsulfoxyde + 5mL d'eau + 0,1g de Chlorure de sodium,
- la figure 6b représente un frottis sanguin après une coloration rapide avec un procédé comprenant une étape de fixation préliminaire pendant 5 minutes à l'éthanol à 99,9° + 2% d'éthylène glycol + diméthylsulfoxyde + 5mL d'eau + 0,3g de Chlorure de sodium, et
- la figure 6c représente un frottis sanguin après une coloration rapide avec un procédé comprenant une étape de fixation préliminaire pendant 5 minutes à l'éthanol à 99,9° + 2% d'éthylène glycol + diméthylsulfoxyde + 5mL d'eau + 0,2g de Chlorure de sodium.

L'invention vise l'utilisation pour effectuer la fixation de tissus et/ou de cellules et/ou de structures cellulaires sur une lame en vue de leur coloration et de leur analyse au microscope ou à l'aide d'un système d'analyse d'image, d'une composition comprenant au moins un alcool, du diméthylsulfoxyde, de l'éthylène glycol, de l'eau et du chlorure de sodium.

Préférentiellement, la composition est utilisée pour fixer des cellules et/ou structures cellulaires du sang ou de la moelle.

Avantageusement, la composition peut également contenir un ou plusieurs colorants et être utilisée pour effectuer simultanément la fixation et la coloration de tissus et/ou de cellules et/ou de structures cellulaires.

L'invention concerne aussi une composition particulière de fixation histologique ou cytologique, encore appelée fixateur.

Par composition de fixation ou fixateur au sens de la présente invention, on entend un réactif permettant de stopper les phénomènes d'autolyse des cellules et tissus afin qu'ils conservent un aspect aussi proche que possible de celui qu'ils ont à l'état vivant. Un tel réactif permet donc de respecter la morphologie et d'immobiliser les cellules et tissus dans le but de réaliser des préparations microscopiques qui pourront être conservées. Il doit aussi permettre de réaliser des traitements complémentaires, comme des colorations, des réactions histochimiques ou immunologiques, afin de révéler certains aspects structuraux, fonctionnels ou génétiques des cellules et tissus.

La composition comprend au moins un alcool, du diméthylsulfoxyde, de l'éthylène glycol, de l'eau et du chlorure de sodium.

L'alcool peut être choisi parmi tous les alcools non toxiques. Préférentiellement l'alcool est l'éthanol ou l'isopropanol.

Il peut s'agir également d'un mélange d'alcools.

Selon un mode de réalisation particulièrement adapté, l'alcool est de l'éthanol. L'eau peut être de l'eau déminéralisée ou de l'eau déionisée.

Afin d'obtenir une meilleure efficacité de la composition, l'eau et le chlorure de sodium doivent être présents dans des proportions particulières. Aussi, selon un mode de réalisation particulièrement adapté, le chlorure de sodium est présent entre 0,1 et 0,5% en masse du total de la composition et l'eau entre 2 et 12%, préférentiellement entre 2,6 et 8,0%, en masse du total de la composition. Encore plus préférentiellement le chlorure de sodium est présent entre 0,2 et 0,3% et l'eau entre 3 et 6%. De même, l'alcool est présent entre 40 et 60% en masse du total de la composition et l'éthylène glycol entre 0,1 et 1% en masse du total de la composition. Encore plus préférentiellement l'alcool est présent entre 50 et 60% et l'éthylène glycol entre 0,1 et 0,5%.

En outre, des résultats particulièrement intéressants sont obtenus lorsque le DMSO est présent entre 30 et 40% en masse du total de la composition.

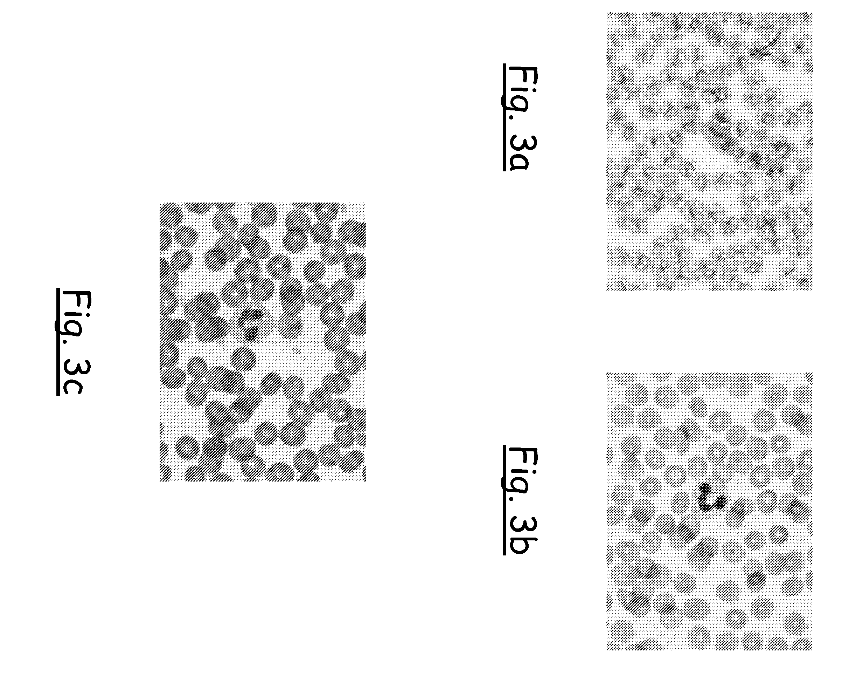

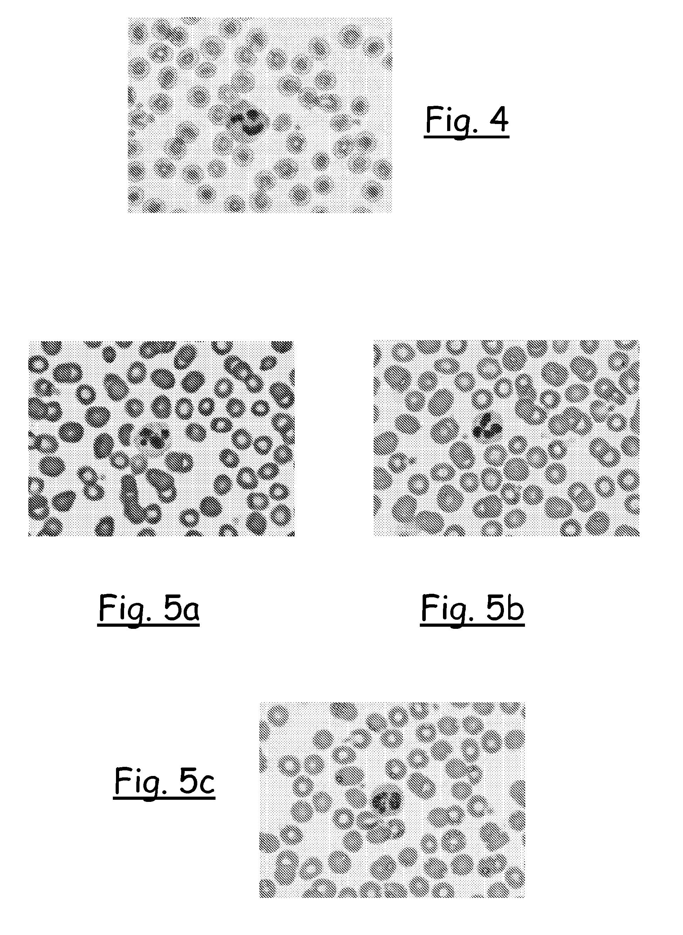

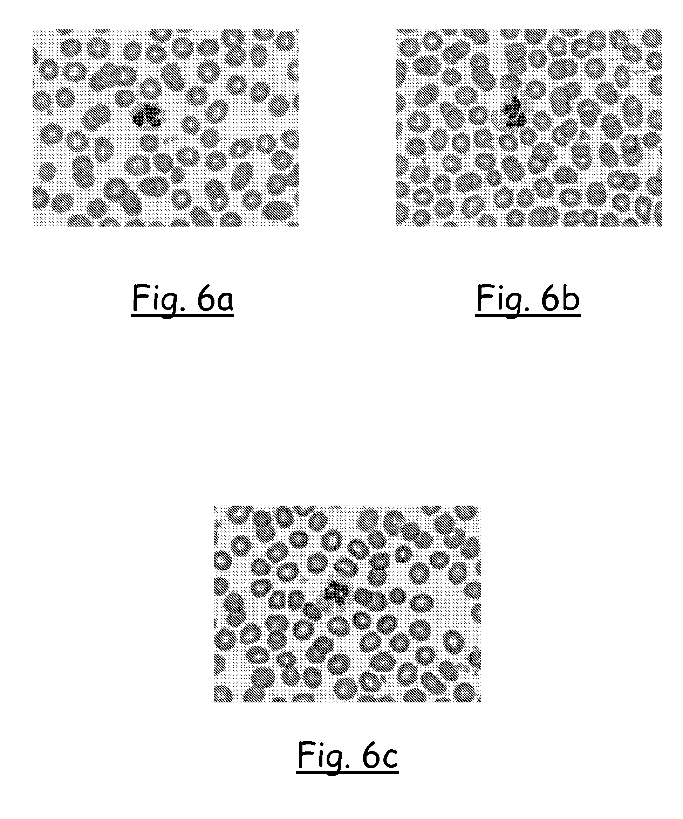

En comparant les différentes figures 3a à 6c, on constate que la présence de chacun des composants alcool, éthylène glycol, diméthylsulfoxyde, chlorure de sodium et eau, est importante. C'est le mélange de ces constituants particuliers qui permet à la composition de pouvoir fixer les cellules, qui pourront ensuite être facilement colorées et analysées.

Sur les figures 3a à 6c les cellules sont fixées avec des compositions comprenant tout ou partie des constituants de la composition selon l'invention, puis colorées par une technique de coloration rapide comme celle utilisée dans le Kit RAL 555 (RAL®) : on plonge la lame fixée dans un premier colorant rouge pendant 5 secondes, puis dans un colorant bleu 5 secondes et enfin on rince et on sèche la lame. Les résultats obtenus sont meilleurs lorsque alcool, éthylène glycol, diméthylsulfoxyde, chlorure de sodium et eau sont présents dans la composition de fixation.

La composition selon l'invention peut être obtenue par un procédé de fabrication comprenant au moins la mise en oeuvre des étapes suivantes :
- mélanger de l'alcool et de l'éthylène glycol de façon à obtenir une solution 1,
- dissoudre du chlorure de sodium dans de l'eau de façon à obtenir une solution 2,
- ajouter la solution 2 dans la solution 1 sous agitation, puis du diméthylsulfoxyde, et
- filtration.

Selon une variante, la composition de fixation selon l'invention comprend également au moins un colorant bleu et au moins un colorant rouge.

Le colorant bleu peut être choisi parmi le bleu de méthylène et/ou le bleu azur I et/ou un colorant bleu appartenant au groupe des thiazines.

Le colorant rouge peut être choisi parmi l'éosine et/ou l'érythrosine. Préférentiellement le ou les colorants bleu et rouge sont dissous dans du diméthylsulfoxyde.

Selon un mode de réalisation particulièrement adapté, la composition selon l'invention comprend :
- du diméthylsulfoxyde,
- un alcool, par exemple de l'éthanol ou de l'isopropanol, ou un mélange d'alcools,
- de l'éthylène glycol,
- de l'eau,
- du chlorure de sodium,
- du Bleu de méthylène - Eosine,
- du Bleu azur I - Eosine,
- du Bleu de méthylène,
- du Bleu azur I de méthylène, et
- un composé du groupe des thiazines.

En particulier la composition selon l'invention peut comprendre :
- environ 32% (en volume) de DMSO,
- environ 63% (en volume) d'alcool,
- environ 0,1% (en volume) d'éthylène glycol,
- environ 4,9% (en volume) d'eau,
- environ 20% (en poids de matière sèche) de Bleu de méthylène - Eosine,
- environ 20% (en poids de matière sèche) de Bleu azur I - Eosine,
- environ 8% (en poids de matière sèche) de Bleu de méthylène,
- environ 8% (en poids de matière sèche) de Bleu azur I de méthylène,
- environ 4% (en poids de matière sèche) d'un composé du groupe des thiazines, et
- environ 40% (en poids de matière sèche) de chlorure de sodium.

Avantageusement, une telle composition permet d'effectuer simultanément la coloration et la fixation des tissus, cellules ou composants cellulaires.

Elle peut être obtenue par un procédé de fabrication comprenant au moins la mise en oeuvre des étapes suivantes :
- préparer une solution 4 comprenant au moins du diméthylsulfoxyde, un colorant bleu et un colorant rouge,
- mélanger un alcool et de l'éthylène glycol de façon à obtenir une solution 1,
- dissoudre du chlorure de sodium dans de l'eau de façon à obtenir une solution 2,
- ajouter la solution 2 dans la solution 1 sous agitation de façon à obtenir une solution 3,
- ajouter la solution 3 sous agitation dans la solution 4, et
- filtration.

Les colorants de la solution 4 sont dissous dans du DMSO.

Préférentiellement l'alcool est l'éthanol.

Avantageusement, le fixateur selon l'invention est dépourvu de produits toxiques tout en permettant une bonne fixation des tissus, cellules et structures cellulaires. Il est particulièrement adapté à la fixation des frottis sanguins et médullaires.

Selon un autre avantage, la composition de fixation peut être utilisée de différentes façons et appliquée à différents procédés de coloration, aussi bien ceux faisant intervenir une combinaison de réactifs de coloration que ceux faisant intervenir un réactif de coloration unique.

L'invention vise néanmoins des procédés particuliers de coloration mettant en oeuvre ce fixateur. Il s'agit de procédés de coloration de cellules ou de structures cellulaires, notamment pour le sang et la moelle.

Ces procédés comprennent au moins une étape consistant à mettre en contact la préparation à colorer avec une composition de fixation objet de l'invention. Selon une première variante, le procédé de coloration comprend au moins les étapes suivantes :
- mettre en contact une préparation à colorer, par exemple une lame portant des frottis sanguins ou médullaires à analyser, avec une composition de fixation selon l'invention, préférentiellement entre 5 et 10 minutes ;
- mettre en contact la préparation fixée avec une solution tampon à pH compris entre 6,5 et 7, préférentiellement entre 3 et 8 minutes, de façon à déclencher et maîtriser le processus de coloration préparé par le fixateur selon l'invention ; il peut être avantageux à cette étape de ne pas éliminer tout le fixateur lors du passage dans la solution tampon,
- mettre en contact, éventuellement en agitant légèrement, la préparation avec une solution de rinçage, préférentiellement entre 5 et 20 secondes, dont les fonctions sont de stopper la coloration en éliminant les colorants en excès, et d'affiner la coloration des structures cellulaires.

Ce procédé correspond à une coloration de type « coloration de Wright/Leishman ».

Selon une seconde variante, le procédé de coloration comprend au moins les étapes suivantes :
- mettre en contact une préparation à colorer avec une composition de fixation selon l'invention, préférentiellement entre 5 et 8 minutes,
- mettre en contact la préparation fixée avec une solution tampon à pH compris entre 6,8 et 7,2, préférentiellement entre 2 et 3 minutes, de façon à déclencher et maîtriser le processus de coloration préparé par le fixateur selon l'invention,
- mettre en contact, éventuellement en agitant légèrement, la préparation avec un réactif de coloration complémentaire, préférentiellement entre 1 et 3 minutes, qui agit en milieu tamponné et permet de parfaire la coloration pour certaines conditions d'utilisation,
- mettre en contact la préparation avec une solution de rinçage, préférentiellement entre 5 et 20 secondes.

Ce procédé correspond à une coloration de type « coloration de May-Grünwald Giemsa ».

Le tampon utilisé pour la mise en oeuvre des procédés selon l'invention peut être composé d'eau, de phosphate disodique, de phosphate monopotassique, d'un agent anti-microbien et d'un tensio-actif non ionique.

Le réactif de coloration complémentaire peut être composé de Bleu de méthylène, de Bleu azur I de méthylène et d'un composé du groupe des Thiazines dissous dans du DMSO, et de phosphate disodique et de phosphate monopotassique dissous dans l'eau.

Le liquide de rinçage quant à lui peut être composé de phosphate disodique, de phosphate monopotassique, d'un agent antimicrobien et d'isopropanol dissous dans l'eau.

Après séchage à l'air, les lames sont prêtes à être observées directement au microscope ou par un système d'analyse d'image.

Avantageusement, avec les produits utilisés, notamment avec le fixateur selon l'invention, il est possible de garantir une standardisation des colorations et d'obtenir une reproductibilité des couleurs. Elles sont liées à la composition des produits, notamment du fixateur, mais également au fait qu'il s'agit de produits prêts à l'emploi. En effet, l'utilisation de tels produits évite d'introduire un facteur humain dans le préparation des solutions, notamment en supprimant les étapes de dilution et d'utilisation de produits complémentaires de qualité variable qui dégradent la qualité et la reproductibilité des colorations.

Cette reproductibilité constitue une référence stable sur laquelle peuvent s'appuyer les systèmes d'analyse d'image. Ces systèmes, chargés d'identifier et de classer les différents types cellulaires en repérant les anomalies éventuelles signes possibles de la présence d'une pathologie, ne peuvent être utilisés que si les résultats obtenus sont reproductibles.

En outre, le fixateur et les réactifs utilisés selon l'invention peuvent être utilisés dans des automates de coloration, car leur utilisation limite les dépôts, diminuant ainsi considérablement le coût d'exploitation de ces machines.

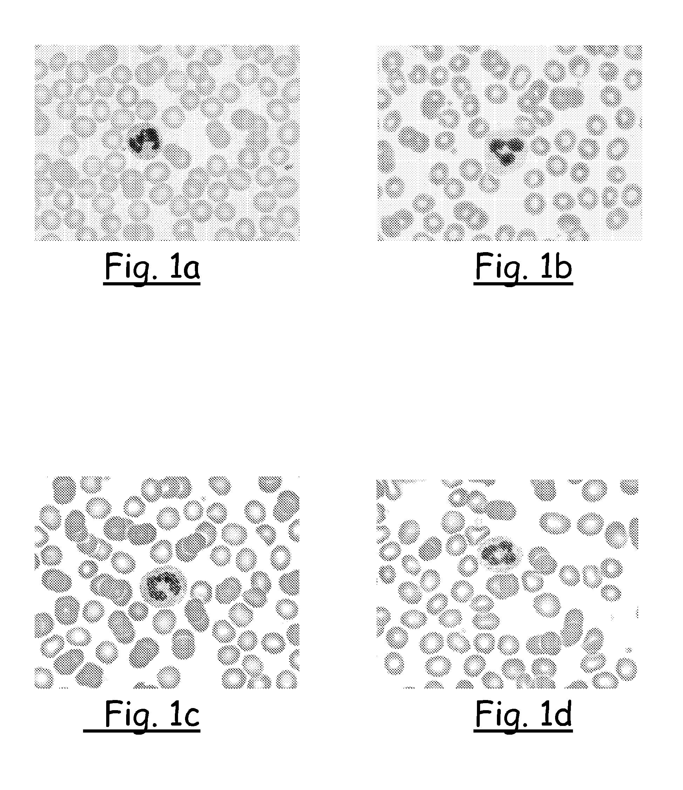

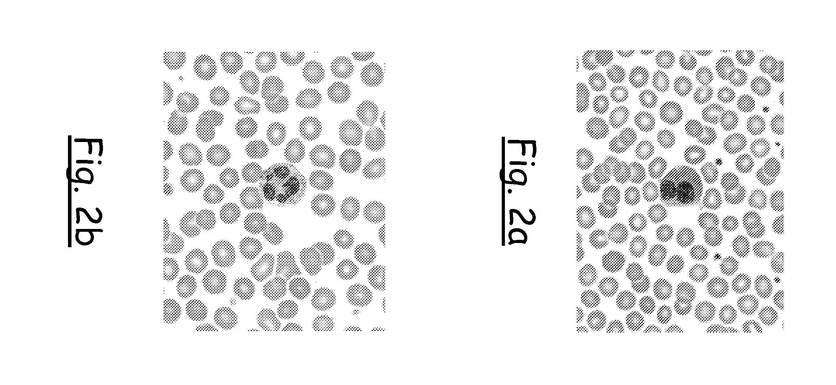

Selon un autre avantage, l'invention permet d'obtenir d'excellents contrastes visuels, permettant une identification précise des différents types cellulaires, et sans dépôt de colorant, source d'artéfacts divers. On constate notamment sur les figures 2a et 2b que le contraste obtenu est meilleur que celui obtenu avec les produits de l'art antérieur (figures 1a, 1b, 1c et 1d).

L'invention est maintenant illustrée par un exemple non limitatif appliqué à l'hématologie.

### - Matériel

### Composition de fixation (produit 1)

La composition de fixation est préparée comme exposé en suivant.

Pour 1 L de produit :
- on prépare une solution A en dissolvant dans 280 à 380 mL de DMSO les colorants suivants : Bleu de méthylène - Eosine, Bleu azur I - Eosine, Bleu de méthylène, Bleu azur I de méthylène, un composé du groupe des thiazines,
- on prépare une solution B en mélangeant entre 550 et 680 mL d'éthanol avec environ 1mL d'éthylène glycol,
- on prépare une solution C en dissolvant entre 1 et 4g de chlorure de sodium dans 40 à 60 mL d'eau,
- on prépare une solution D en ajoutant la solution C sous agitation à la solution B,
- on ajoute sous agitation la solution A à la solution D, et
- on filtre le mélange.

### Tampon (produit 2)

Le tampon est préparé par la mise en oeuvre du protocole décrit en suivant.

Pour 1L de produit, on dissout dans environ 1L d'eau, entre 0,189 et 0,530 g de phosphate disodique, entre 0,399 et 0,726 g de phosphate monopotassique, environ 1g d'un agent anti-microbien et environ 1g d'un tensio-actif non ionique. L'ensemble est ensuite filtré.

### Réactif de coloration complémentaire (produit 3)

Le réactif de coloration complémentaire est préparé comme suit.

Pour 1L de produit :
- on prépare une première solution en dissolvant dans entre 10 et 15 mL de DMSO les colorants suivants : Bleu de méthylène, Bleu azur I de méthylène et un composé du groupe des thiazines,
- on prépare une seconde solution en dissolvant dans entre 985 et 990mL d'eau, entre 5 et 8g de phosphate disodique et entre 1,5 et 3g de phosphate monopotassique,
- on ajoute la première solution sous agitation à la seconde solution, et
- on filtre le mélange.

### Liquide de rinçage (produit 4)

Le liquide de rinçage est obtenu, pour 1L de produit en dissolvant dans environ 940mL d'eau, entre 0,3 et 0,5g de phosphate disodique, entre 0,3 et 0,5g de phosphate monopotassique, environ 0,1g d'un agent antimicrobien, et entre 45 et 50g d'alcool (préférentiellement isopropanol). L'ensemble est ensuite filtré.

### - Exemple de procédé de coloration : résultats du type « coloration de May-Grünwald Giemsa »

Pour obtenir des résultats reconnus par les spécialistes de la profession comme une coloration du type « coloration de May-Grünwald Giemsa », il est possible de mettre en oeuvre la succession des étapes suivantes :
- mettre en contact 5 à 8 minutes une lame portant un frottis sanguin ou médullaire à analyser avec le produit 1,
- mettre en contact 2 à 3 minutes la lame avec le produit 2,
- mettre en contact 1 à 3 minutes la lame avec le produit 3, et
- mettre en contact 5 à 20 secondes, éventuellement en agitant légèrement, la lame avec le produit 4.

Après séchage à l'air, les lames sont prêtes à être observées directement au microscope ou par un système d'analyse d'image.

Les résultats obtenus sont présentés sur la figure 2a.

### - Exemple de procédé de coloration : résultats du type « coloration de Wright/Leishman »

Pour obtenir des résultats reconnus par les spécialistes de la profession comme une coloration du type « coloration de Wright/Leishman», il est possible de mettre en oeuvre la succession des étapes suivantes :
- mettre en contact 5 à 10 minutes une lame portant un frottis sanguin ou médullaire à analyser avec le produit 1,
- mettre en contact 3 à 8 minutes la lame avec le produit 2, et
- mettre en contact 5 à 20 secondes, éventuellement en agitant légèrement, la lame avec le produit 4.

Après séchage à l'air, les lames sont prêtes à être observées directement au microscope ou par un système d'analyse d'image.

Les résultats obtenus sont présentés sur la figure 2b.

Bien entendu, l'invention n'est évidemment pas limitée au mode de réalisation représenté et décrit ci-dessus, mais en couvre au contraire toutes les variantes.

## Revendications

1. Composition de fixation de tissus, et/ou cellules et/ou structures cellulaires en vue de leur coloration et de leur analyse par microscope ou par un système d'analyse d'image, **caractérisée en ce qu'**elle comprend au moins les composants suivants, les pourcentages étant donnés en masse par rapport à la composition totale :
- entre 40 et 60% d'alcool,
- du diméthylsulfoxyde,
- entre 0,1 et 1% d'éthylène glycol,
- entre 2 et 12% d'eau et
- entre 0,1 et 0,5% de chlorure de sodium.

2. Composition selon la revendication 1, **caractérisée en ce que** l'alcool est l'éthanol ou l'isopropanol.

3. Composition selon l'une des précédentes revendications, **caractérisée en ce que** le diméthylsulfoxyde est présent entre 30 et 40% en masse de la composition totale.

4. Composition selon l'une des précédentes revendications, **caractérisée en ce qu'**elle comprend également au moins un colorant bleu et au moins un colorant rouge.

5. Composition selon la revendication 4, **caractérisée en ce que** le colorant bleu est choisi parmi le bleu de méthylène et/ou le bleu azur I et/ou un colorant bleu appartenant au groupe des thiazines et **en ce que** le colorant rouge est choisi parmi l'éosine et/ou érythrosine.

6. Procédé de fabrication d'une composition selon l'une des revendications 1 à 5, **caractérisé en ce qu'**il comprend au moins la mise en oeuvre des étapes suivantes :
- mélanger de l'alcool et de l'éthylène glycol de façon à obtenir une solution 1,
- dissoudre du chlorure de sodium dans de l'eau de façon à obtenir une solution 2,
- ajouter la solution 2 dans la solution 1 sous agitation, puis du diméthylsulfoxyde, et
- filtration.

7. Procédé de fabrication d'une composition selon l'une des revendications 1 à 5, **caractérisé en ce qu'**il comprend au moins la mise en oeuvre des étapes suivantes :
- préparer une solution 4 comprenant au moins du diméthylsulfoxyde, un colorant bleu et un colorant rouge,
- mélanger un alcool et de l'éthylène glycol de façon à obtenir une solution 1,
- dissoudre du chlorure de sodium dans de l'eau de façon à obtenir une solution 2,
- ajouter la solution 2 dans la solution 1 sous agitation de façon à obtenir une solution 3,
- ajouter la solution 3 sous agitation dans la solution 4, et
- filtration.

8. Procédé de fabrication selon la revendication 7, **caractérisé en ce que** la solution 4 est obtenue en dissolvant dans du diméthylsulfoxyde les colorants suivants :
- Bleu de méthylène - Eosine
- Bleu azur I - Eosine
- Bleu de méthylène
- Bleu azur I de méthylène
- Composé du groupe des thiazines.

9. Procédé de fabrication selon l'une des revendications 6 à 8, **caractérisé en ce que** l'alcool est l'éthanol ou l'isopropanol.

10. Procédé de coloration de cellules ou de structures cellulaires, notamment pour le sang et la moelle, **caractérisé en ce qu'**il comprend au moins une étape consistant à mettre en contact la préparation à colorer avec une composition de fixation selon l'une des revendications 4 ou 5.

11. Procédé de coloration selon la revendication 10 comprenant de plus les étapes :
- mettre en contact la préparation fixée avec une solution tampon à pH compris entre 6,5 et 7,0,
- mettre en contact la préparation avec une solution de rinçage.

12. Procédé de coloration selon l'une des revendications 10 ou 11, **caractérisé en ce que** :
- la préparation à colorer est mise en contact dans la composition de fixation pendant 5 à 10 minutes,
- la préparation fixée est mise en contact dans la solution tampon à pH compris entre 6,5 et 7,0 pendant 3 à 8 minutes, et
- la préparation résultant est mise en contact avec une solution de rinçage pendant 5 à 20 secondes.

13. Procédé de coloration selon la revendication 10, comprenant de plus les étapes :
- mettre en contact la préparation fixée avec une solution tampon à pH compris entre 6,8 et 7,2,
- mettre en contact la préparation avec un réactif de coloration complémentaire,
- mettre en contact la préparation avec une solution de rinçage.

14. Procédé de coloration selon la revendication 13, **caractérisé en ce qu'**il comprend les étapes :
- mettre en contact pendant 5 à 8 minutes la préparation à colorer avec une composition de fixation selon l'une des revendications 4 ou 5,
- mettre en contact pendant 2 à 3 minutes la préparation fixée avec une solution tampon à pH compris entre 6,8 et 7,2,
- mettre en contact pendant 1 à 3 minutes la préparation avec un réactif de coloration complémentaire,
- mettre en contact pendant 5 à 20 secondes la préparation avec une solution de rinçage.

## Patentansprüche

1. Zusammensetzung für die Bindung von Gewebe und/oder Zellen und/oder Zellstrukturen für deren Färbung und Analyse durch Mikroskop oder ein System für Bildanalyse, **dadurch gekennzeichnet, dass** diese wenigstens die folgenden Bestandteile aufweist, wobei die Prozentangaben Masseangaben bezüglich der gesamten Zusammensetzung sind:
- zwischen 40 und 60% Alkohol,
- Dimethylsulfoxid,
- zwischen 0,1 und 1% Ethylenglykol,
- zwischen 2 und 12% Wasser und
- zwischen 0,1 und 0,5% Natriumchlorid.

2. Zusammensetzung nach Anspruch 1, **dadurch gekennzeichnet, dass** der Alkohol Ethanol oder Isopropanol ist.

3. Zusammensetzung nach einem der vorhergehenden Ansprüche, **dadurch gekennzeichnet, dass** Dimethylsulfoxid mit einem Anteil von 30 bis 40% an der Masse der gesamten Zusammensetzung vorhanden ist.

4. Zusammensetzung nach einem der vorhergehenden Ansprüche, **dadurch gekennzeichnet, dass** diese weiterhin wenigstens ein blaues Färbemittel und wenigstens ein rotes Färbemittel aufweist.

5. Zusammensetzung nach Anspruch 4, **dadurch gekennzeichnet, dass** das blaue Färbemittel aus Methylenblau und/oder Azurblau I und/oder aus einem Farbstoff ausgewählt ist, der zur Gruppe der Thiazine gehört, und dass das rote Färbemittel aus Eosin und/oder Erythrosin ausgewählt ist.

6. Herstellungsverfahren einer Zusammensetzung nach einem der Ansprüche 1 bis 5, **dadurch gekennzeichnet, dass** dieses wenigstens die Ausführung der folgenden Verfahrensschritte umfasst:
- Mischen von Alkohol und Ethylenglykol, um eine Lösung 1 zu erhalten,
- Auflösen von Natriumchlorid in Wasser, um eine Lösung 2 zu erhalten,
- Hinzufügen der Lösung 2 zu der Lösung 1 unter Rühren, dann von Dimethylsulfoxid, und
- Filtrierung.

7. Herstellungsverfahren einer Zusammensetzung nach einem der Ansprüche 1 bis 5, **dadurch gekennzeichnet, dass** dieses wenigstens die Ausführung der folgenden Verfahrensschritte umfasst:
- Herstellen einer Lösung 4, die wenigstens Dimethylsulfoxid, ein blaues Färbemittel und ein rotes Färbemittel umfasst,
- Mischen von Alkohol und Ethylenglykol, um eine Lösung 1 zu erhalten,
- Lösen von Natriumchlorid in Wasser, um eine Lösung 2 zu erhalten,
- Hinzufügen der Lösung 2 zu der Lösung 1 unter Rühren, um eine Lösung 3 zu erhalten,
- Hinzufügen der Lösung 3 unter Rühren zur Lösung 4, und
- Filtrierung.

8. Herstellungsverfahren nach Anspruch 7, **dadurch gekennzeichnet, dass** die Lösung 4 erhalten wird, indem in Dimethylsulfoxid die folgenden Färbemittel gelöst werden:
- Methylenblau - Eosin
- Azurblau I - Eosin
- Methylenblau
- Methylen-Azurblau I
- Verbindung aus der Gruppe der Thiazine.

9. Herstellungsverfahren nach einem der Ansprüche 6 bis 8, **dadurch gekennzeichnet, dass** der Alkohol Ethanol oder Isopropanol ist.

10. Verfahren für die Färbung von Zellen oder Zellstrukturen, insbesondere für Blut und Mark, **dadurch gekennzeichnet, dass** dieses wenigstens einen Verfahrensschritt aufweist, der darin besteht, die Zubereitung zum Einfärben mit einer Zusammensetzung zum Binden nach einem der Ansprüche 4 oder 5 in Kontakt zu bringen.

11. Verfahren zum Einfärben nach Anspruch 10, das die weiteren Verfahrensschritte umfasst:
- In-Kontakt-Bringen der gebundenen Zubereitung mit einer Pufferlösung mit einem pH-Wert zwischen 6,5 und 7,0,
- In-Kontakt-Bringen der Zubereitung mit einer Spüllösung.

12. Verfahren zum Einfärben nach einem der Ansprüche 10 oder 11, **dadurch gekennzeichnet, dass**:
- die Zubereitung zum Einfärben während 5 bis 10 Minuten mit der Zusammensetzung zum Binden in Kontakt gebracht wird,
- die gebundene Zubereitung mit der Pufferlösung mit einem pH-Wert zwischen 6,5 und 7,0 während 3 bis 8 Minuten in Kontakt gebracht wird, und
- die sich ergebende Zubereitung mit einer Spüllösung während 5 bis 20 Sekunden in Kontakt gebracht wird.

13. Verfahren zum Einfärben nach Anspruch 10, das weiter die folgenden Verfahrensschritte umfasst:
- In-Kontakt-Bringen der gebundenen Zubereitung mit einer Pufferlösung mit einem pH-Wert zwischen 6,8 und 7,2,
- In-Kontakt-Bringen der Zubereitung mit einem Reaktionsmittel für eine komplementäre Einfärbung,
- In-Kontakt-Bringen der Zubereitung mit einer Spüllösung.

14. Verfahren zum Einfärben nach Anspruch 13, **dadurch gekennzeichnet, dass** dieses die Verfahrensschritte umfasst:
- In-Kontakt-Bringen der Zubereitung zum Einfärben mit einer Zusammensetzung zum Binden nach einem der Ansprüche 4 oder 5 während 5 bis 8 Minuten,
- In-Kontakt-Bringen der gebundenen Zubereitung mit einer Pufferlösung mit einem pH-Wert zwischen 6,8 und 7,2 während 2 bis 3 Minuten,
- In-Kontakt-Bringen der Zubereitung mit einem Reaktionsmittel für eine komplementäre Einfärbung zwischen 1 bis 3 Minuten,
- In-Kontakt-Bringen der Zubereitung mit einer Spüllösung zwischen 5 bis 20 Sekunden.

## Claims

1. A composition for fixing tissues and/or cells and/or cell structures with a view to colouring thereof and analysis thereof by microscope or by an image analysis system, **characterised in that** it comprises at least the following components, the percentages being given by mass with respect to the total composition:
- between 40% and 60% alcohol,
- dimethylsulfoxide,
- between 0.1% and 1% ethylene glycol,
- between 2% and 12% water, and
- between 0.1% and 0.5% sodium chloride.

2. A composition according to claim 1, **characterised in that** the alcohol is ethanol or isopropanol.

3. A composition according to one of the preceding claims, **characterised in that** the dimethylsulfoxide is present at between 30% and 40% by mass of the total composition.

4. A composition according to one of the preceding claims, **characterised in that** it also comprises at least one blue dye and at least one red dye.

5. A composition according to claim 4, **characterised in that** the blue dye is chosen from methylene blue and/or azure I blue and/or a blue dye belonging to the group of thiazines, and **in that** the red dye is chosen from eosine and/or erythrosine.

6. A method for manufacturing a composition according to one of claims 1 to 5, **characterised in that** it comprises at least the implementation of the following steps:
- mixing alcohol and ethylene glycol so as to obtain a solution 1,
- dissolving sodium chloride in water so as to obtain a solution 2,
- adding solution 2 to solution 1 under stirring, and then dimethylsulfoxide, and
- filtration.

7. A method for manufacturing a composition according to one of claims 1 to 5, **characterised in that** it comprises at least the implementation of the following steps:
- preparing a solution 4 comprising at least dimethylsulfoxide, a blue dye and a red dye,
- mixing an alcohol and ethylene glycol so as to obtain a solution 1,
- dissolving sodium chloride in water so as to obtain a solution 2,
- adding solution 2 to solution 1 under stirring so as to obtain a solution 3,
- adding solution 3 under stirring to solution 4, and
- filtration.

8. A manufacturing method according to claim 7, **characterised in that** solution 4 is obtained by dissolving the following dyes in dimethylsulfoxide:
- methylene blue - eosine
- azure I blue - eosine
- methylene blue
- azure I methylene blue
- compound of the thiazine group.

9. A manufacturing method according to one of claims 6 to 8, **characterised in that** the alcohol is ethanol or isopropanol.

10. A method for colouring cells or cell structures, in particular for blood and marrow, **characterised in that** it comprises at least a step consisting of putting the preparation to be coloured in contact with a fixing composition according to one of claims 4 or 5.

11. A colouring method according to claim 10, comprising in addition the steps of:
- putting the fixed preparation in contact with a buffer solution with a pH of between 6.5 and 7.0,
- putting the preparation in contact with a rinsing solution.

12. A colouring method according to one of claims 10 or 11, **characterised in that**:
- the preparation to be coloured is put in contact in the fixing composition for 5 to 10 minutes,
- the fixed preparation is put in contact in the buffer solution with a pH of between 6.5 and 7.0 for 3 to 8 minutes, and
- the resulting preparation is put in contact with a rinsing solution for 5 to 20 seconds.

13. A colouring method according to claim 10, comprising in addition the steps of:
- putting the fixed preparation in contact with a buffer solution with a pH of between of 6.8 and 7.2,
- putting the preparation in contact with a complementary colouring reagent,
- putting the preparation in contact with a rinsing solution.

14. A colouring method according to claim 13, **characterised in that** it comprises the steps of:
- putting the preparation to be coloured in contact for 5 to 8 minutes with a fixing composition according to one of claims 4 or 5,
- putting the fixed preparation in contact for 2 to 3 minutes with a buffer solution with a pH of between 6.8 and 7.2,
- putting the preparation in contact for 1 to 3 minutes with a complementary colouring reagent,
- putting the preparation in contact with a rinsing solution for 5 to 20 seconds.
